# EUROPEAN PATENT SPECIFICATION

(11) **EP 3 441 561 B1**
(45) Date of publication and mention of the grant of the patent: **15.03.2023**
(21) Application number: 16897792.4
(22) Date of filing: 04.04.2016
(51) Int. Cl.: F01D 1/06, F03D 1/06, F16B 2/14, F16B 31/04

(54) **DEVICE FOR JOINING A MODULAR BLADE**
VORRICHTUNG ZUM VERBINDEN EINES MODULAREN BLATTES
DISPOSITIF POUR L'ASSEMBLAGE D'UNE PALE MODULAIRE

(43) Date of publication of application: 13.02.2019
(73) Proprietor: Nabrawind Technologies SL, 31002 Pamplona (ES)
(72) Inventor: MONREAL LESMES, Javier, 31180 Zizur Mayor (Navarra) (ES); CALLÉN ESCARTÍN, Javier, 22005 Huesca (ES); AROCENA DE LA RÚA, Ion, 31001 Pamplona (Navarra) (ES); SAVII COSTA, Hely Ricardo, 31133 Uterga (Navarra) (ES); SANZ PASCUAL, Eneko, 31002 Pamplona (Navarra) (ES)
(74) Representative: Igartua, Ismael
(86) International application number: PCT/ES2016/000042
(87) International publication number: WO 2017/174828

(56) References cited:
- WO-A1-2013/117911
- WO-A1-2015/181401
- DE-A1- 3 109 566
- US-A1- 2006 083 611
- US-A1- 2014 271 210
- US-A1- 2015 292 477

## Description

### Field of the invention

The current invention is related with modular blades having metal inserts for wind turbines, and more specifically with the joint of said modular blades, said joint consisting of various bolts threaded in a first insert of a first module and in a second insert of a second module and of a device applied between the inserts/blade modules which prestresses all the bolts.

### Background of the invention

The patent WO2015181401 from the same applicant as the current invention, describes the joint of a modular blade where the modules are fixed using various bolted bolts between primary and secondary metal inserts. Once each bolt is threaded in its inserts, the bolt must be stressed, taking into account how little space there is between the two blade modules. Various solutions are described in the patent, both to stretch the bolt initially and to maintain this stretching or pre-stressing using spacers placed at intervals. If, during detailed development and during the joint validation, a faster and more simple solution is found: pre-stress each of the inserts with a device based on the great strength generated by a wedge positioned perpendicularly to the direction of movement.

The document WO2013117911 describes different kinds of bolt-tensioners.

### Description of the invention

The object of the invention is to provide a modular blade, as defined in the claims.

The modular blade of the invention comprises a first module and a second module of a wind turbine and a device of joining mechanically said modules using a group of bolted bolts that join the two modules, each bolt being threaded in a first insert housed in the first module and in a second insert housed in the second module. The inserts comprise a threaded part and an unthreaded hollow area to facilitate the insertion of the corresponding bolts. The device of joining comprises for each bolt a first and second metal lateral caps, a metal upper wedge, a metal lower wedge and metal traverse bolts that traverse both wedges, the device of joining being located in the gap formed between the first and second modules surrounding the corresponding bolt as a simple pre-stressing machine.

One face of the first lateral cap of each bolt is in contact with the first insert and one other face of the first lateral cap of each bolt is in contact with the upper and lower wedges. In the other hand, one face of the second lateral cap of each bolt is in contact with the second insert and one other face of the second lateral cap of each bolt is in contact with the upper and lower wedges, so that during the joining of the modules, when a force F1 is applied to the wedges, the movement between the wedges and the caps generates two opposite forces F2 that separate the modules, pre-stressing the corresponding bolts.

With the device of joining of the invention a simple mechanical action is achieved based on said wedges that are applied individually on each of the joint points_formed by a single bolted bolt obtaining the required pre-stressing.

During the joining of the modules, when a force F1 is applied to the wedges , either through the transverse bolts or through an external force applied directly to the wedges, said force F1 is transformed in two opposing forces F2 that separates the modules, pre-stressing the corresponding bolt individually. The angle of the wedge determines the ratio between the applied forces and the resulting transverse forces, due to the decomposition of forces in the inclined plane.

The following advantages are derived from everything described above.

The joint is mounted simply and can easily reach the necessary pre-stressing. This is achieved due to the force-multiplying effect obtained with the wedge element. A common effect of all simple machines that convert a small force into a large one. Some, like the wedge, also convert the direction of force.

Moreover, the great compression stiffness of these parts means that they behave like rigid solid objects, allowing a much more robust geometric control of the preload than in systems with flexible elements placed at intervals.

With this new system, the required pre-stressing is obtained in the main bolt, allowing a suitable distribution of the fatigue loads in the gasket and therefore ensuring the useful life of the bolt.

It must also be emphasised that the transverse bolts responsible for the initial pre-stressing receive almost no fatigue loads due to the fact that friction on the inclined planes of the wedges prevents displacement.

This allows this joint system to have much less probability of loss of preload than in traditional systems, both due to the abovementioned low loads, and due to the simple fact that various elements are parallel to each other for the application of this preload.

For this reason, this system does not need to be preloaded again during its service life and will be maintenance-free, which is a large advantage over those mentioned above.

In summary, this new invention allows for preloading with less application force and more precision than current systems, also ensuring that it is maintenance-free.

### Brief description of the drawings

A brief description will be given below for a series of drawings useful for better understanding the invention. These drawings serve as a mere example and are expressly related yet not restricted to one embodiment of this invention.
Figure 1 is a general view of a modular blade joint.
Figure 2 is a perspective view of an isolated joint device.
Figure 3 is a cross section of the device in the previous figure.
Figures 4a and 4b are two sectioned views that show the action of the wedge and the effect on the bolt.
Figure 5 is a general view of a clamp that holds the joint devices unit.

### Detailed description of the invention

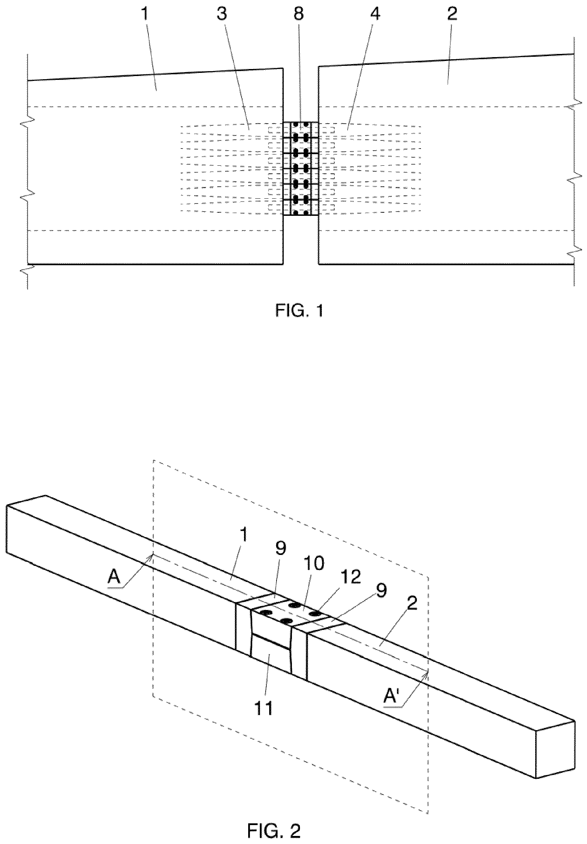

As shown in figure 1, the modules (1 and 2) of the blade are facing each other and have a primary metal insert (3) and a secondary metal insert (4) inside them. These inserts (3 and 4) are housed inside the composite material (5) that makes up the blade modules during the manufacturing process. The joint between the inserts is formed by a single bolt (8) for each pair of inserts (3 and 4). The final joint is formed by a plurality of bolts (8).

Figure 2 shows that the device encompasses the corresponding bolt (8, hidden in figure 2) and is positioned inside the gap between the two modules (1 and 2). This device is composed of lateral caps (9) and upper (10) and lower (11) wedges. The lateral cap (9) has one of its faces in contact with the inserts (3 and 4), and its other face is in contact with the upper (10) and lower (11) wedges. Both wedges (10 and 11) are joined with their corresponding transverse bolts (12).

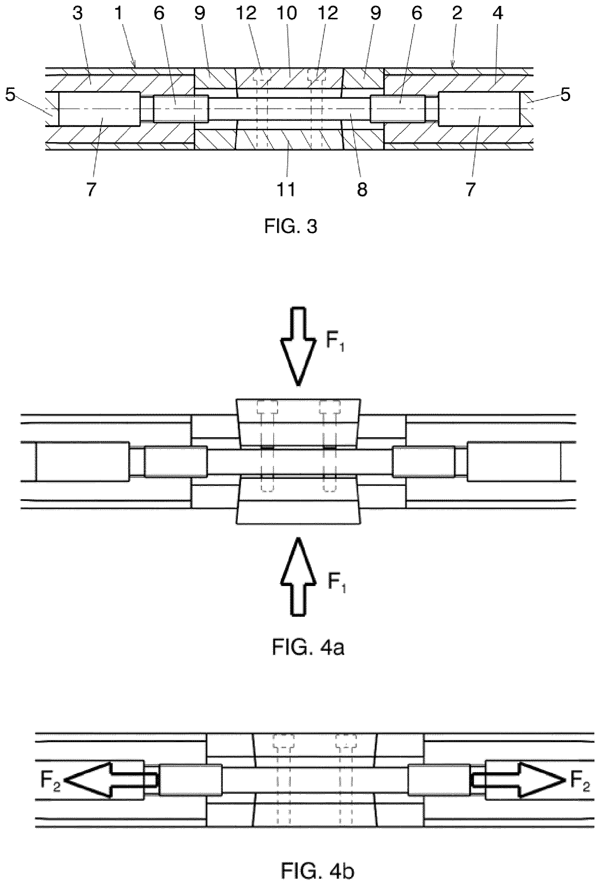

As shown in figure 3, the inserts (3 and 4) have a threaded part and an unthreaded hollow area (7), to facilitate the insertion of the bolt (8) and more specifically its threaded area (6). In this way the bolt (8) is initially threaded in the primary insert (3), passing through the threaded part and penetrating the hollow area (7). At that time, it reaches the second module (3) and the bolt is unscrewed from the primary module (1) and screwed into the secondary insert (4). The lateral caps (9) are fitted before threading the secondary module. Then the upper (10) and lower (11) wedges are fitted with their corresponding transverse bolts (12).

Figures 4a and 4b show how, when a force F1 is applied to the upper (10) and lower (11) wedges, these wedges transform the vertical force into two horizontal forces F2 that individually pre-stress the single bolt (8). The angle of the wedge determines the ratio between the applied forces and the resulting forces; the most common ranges are between any angle greater than 0° and 15°. In the present invention, the angle formed by the wedge is preferably 5°.

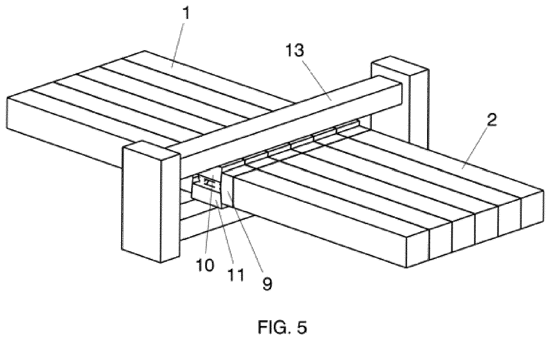

The force applied to the upper (10) and lower (11) wedges is provided either by the transverse bolts (12) during their coordinated torque or by hydraulic or mechanical equipment (13) applied directly to the exterior surface of the wedges (10 and 11), either individually or collectively on all of them, as shown in figure 5.

Figure 5 shows a system that would apply transverse force simultaneously using a single action system, for example hydraulic, on two elements (13) that would contact the wedges (10 and 11) bringing them closer to each other.

In figures 2 and 3, the upper wedge (10) has at least two transverse bolts (12), which in the practical application of the invention, would be four transverse bolts (12), whose heads are inserted into the wedges. These transverse bolts (12) are through bolts and extend to the lower wedge (11) without going through it.

Once the pre-stressing of the bolts (12) is complete, the joint mechanically locks with self-locking threads, adhesives, etc.

## Claims

1. Modular blade, comprising a first module (1), a second module (2) and a device for joining the first and second modules (1, 2), the device for joining comprising a plurality of bolts (8) positioned between the two modules (1, 2), where each bolt (8) is threaded in a first insert (3) housed in the first module (1) and in a second insert (4) housed in the second module (2), wherein the inserts (3, 4) have a threaded part and an unthreaded hollow area (7) to facilitate the insertion of the respective bolt (8) joining the two modules (1, 2), the device for joining comprising for each bolt (8) a first and second lateral caps (9), an upper wedge (10), a lower wedge (11) and transverse bolts (12) that traverse both wedges (10, 11), all of which is metal, surrounding the corresponding bolt (8) and positioned inside a gap that exists between the two modules (1, 2), one face of the first lateral cap (9) being in contact with the first insert (3) and one other face of the first lateral cap (9) being in contact with the upper and lower wedges (10, 11), one face of the second lateral cap (9) being in contact with the second insert (4) and one other face of the second lateral cap (9) being in contact with the upper and lower wedges (10, 11), so that, during the joining of the modules (1, 2), when a force F1 is applied to the wedges (10, 11), the movement between the wedges (10, 11) and the caps (9) generates two opposite forces F2 that separate the modules (1, 2) pre-stressing the corresponding bolt (8).

2. Modular blade according to claim 1, wherein the wedges (10, 11) have an angle of inclination between 0° and 15°, preferably 5°.

3. Modular blade according to claim 1, wherein the force F1 applied to the wedges (10, 11) is applied through an hydraulic or mechanical equipment (13) which is suitable for acting simultaneously on all the wedges (10, 11).

4. Modular blade according to claim 1, wherein the force F1 applied to the wedges (10, 11) is applied by threading at least two transverse bolts (12), preferably four.

5. Modular blade according to claim 1, wherein the heads of the transverse bolts (12) are maintained below the surface of the upper wedge (10) and their bodies do not pass through the lower wedge (11).

6. Modular blade according to claim 1, wherein the lateral caps (9) are a single part.

## Patentansprüche

1. Modulares Blatt, umfassend ein erstes Modul (1), ein zweites Modul (2) und eine Vorrichtung zum Verbinden des ersten Moduls (1) und des zweiten Moduls (2), wobei die Verbindungsvorrichtung eine Vielzahl von zwischen den beiden Modulen (1, 2) positionierten Bolzen (8) umfasst, wobei jeder Bolzen (8) in einem ersten Einsatz (3), welcher im ersten Modul (1) aufgenommen ist, und in einem zweiten Einsatz (4), welcher im zweiten Modul (2) aufgenommen ist, geschraubt ist, wobei die Einsätze (3, 4) einen Gewindeteil und einen Hohlraum (7), welcher mit keinem Gewinde versehen ist, um das Einsetzen des jeweiligen Bolzens (8), welcher die beiden Module (1, 2) verbindet, zu erleichtern, wobei die Verbindungsvorrichtung für jeder Bolzen (8) eine erste und eine zweite seitliche Kappe (9), einen oberen Keil (10), einen unteren Keil (11) und Querbolzen (12), welche beide Keile (10, 11) durchqueren, umfasst, alle aus Metall, den entsprechenden Bolzen (8) umgebend und innerhalb einer Lücke, welche zwischen den beiden Modulen (1, 2) gibt, positioniert, wobei eine Fläche der ersten seitlichen Kappe (9) mit dem ersten Einsatz (3) in Kontakt ist und eine andere Fläche der ersten seitlichen Kappe (9) mit dem oberen Keil (10) und dem unteren Keil (11) in Kontakt ist, wobei eine Fläche der zweiten seitlichen Kappe (9) mit dem zweiten Einsatz (4) in Kontakt ist und eine andere Fläche der zweiten seitlichen Kappe (9) mit dem oberen Keil (10) und dem unteren Keil (11) in Kontakt ist, sodass, während der Verbindung der Module (1, 2), wenn eine Kraft F1 auf die Keile (10, 11) aufgebracht wird, die Bewegung zwischen den Keilen (10, 11) und den Kappen (9) zwei entgegengesetzte Kräfte F2 erzeugt, welche die Module (1, 2) trennen, unter Vorspannung des entsprechenden Bolzens (8).

2. Modulares Blatt nach Anspruch 1, wobei die Keile (10, 11) einen Neigungswinkel von zwischen 0° und 15°, vorzugsweise 5°, aufweisen.

3. Modulares Blatt nach Anspruch 1, wobei die auf die Keile (10, 11) aufgebrachte Kraft F1 über eine hydraulische oder mechanische Einrichtung (13) aufgebracht wird, welche dafür geeignet ist, gleichzeitig auf alle Keile (10, 11) zu wirken.

4. Modulares Blatt nach Anspruch 1, wobei die auf die Keile (10, 11) aufgebrachte Kraft F1 mittels des Schraubens von mindestens zwei, vorzugsweise vier, Querbolzen (12) aufgebracht wird.

5. Modulares Blatt nach Anspruch 1, wobei die Köpfe der Querbolzen (12) unter der Oberfläche des oberen Keils (10) gehalten werden und deren Körper nicht durch den unteren Keil (11) durchgehen.

6. Modulares Blatt nach Anspruch 1, wobei die seitlichen Kappen (9) ein Einzelteil sind.

## Revendications

1. Lame modulaire, comprenant un premier module (1), un second module (2) et un dispositif pour joindre les premier et second modules (1, 2), le dispositif pour joindre comprenant une pluralité de boulons (8) positionnés entre les deux modules (1, 2), où chaque boulon (8) est fileté dans un premier insert (3) logé dans le premier module (1) et dans un second insert (4) logé dans le second module (2), dans lequel les inserts (3, 4) ont une partie filetée et une zone creuse non filetée (7) pour faciliter l'insertion du boulon respectif (8) joignant les deux modules (1, 2), le dispositif de jonction comprenant pour chaque boulon (8) un premier et un second capuchon latéral (9), une cale supérieure (10), une cale inférieure (11) et des boulons transversaux (12) qui traversent les deux cales (10, 11), le tout en métal, entourant le boulon correspondant (8) et positionné à l'intérieur d'un espace qui existe entre les deux modules (1, 2), une face du premier capuchon latéral (9) étant en contact avec le premier insert (3) et une autre face du premier capuchon latéral (9) étant en contact avec les cales supérieure et inférieure (10, 11), une face de la deuxième coiffe latérale (9) étant en contact avec le deuxième insert (4) et une autre face de la deuxième coiffe latérale (9) étant en contact avec les clavettes supérieure et inférieure (10, 11), de sorte que, lors de l'assemblage des modules (1, 2), lorsqu'une force F1 est appliquée sur les clavettes (10, 11), le mouvement entre les clavettes (10, 11) et les coiffes (9) génère deux forces F2 opposées qui séparent les modules (1, 2) en précontraignant le boulon (8) correspondant.

2. Lame modulaire selon la revendication 1, dans laquelle les coins (10, 11) ont un angle d'inclinaison compris entre 0° et 15°, de préférence 5°.

3. Lame modulaire selon la revendication 1, dans laquelle la force F1 appliquée aux clavettes (10, 11) est appliquée par l'intermédiaire d'un équipement hydraulique ou mécanique (13) adapté pour agir simultanément sur toutes les clavettes (10, 11).

4. Lame modulaire selon la revendication 1, dans laquelle la force F1 appliquée sur les coins (10, 11) est appliquée par enfilage d'au moins deux boulons transversaux (12), de préférence quatre.

5. Lame modulaire selon la revendication 1, dans laquelle les têtes des boulons transversaux (12) sont maintenues sous la surface de la cale supérieure (10) et leurs corps ne traversent pas la cale inférieure (11).

6. Lame modulaire selon la revendication 1, dans laquelle les capots latéraux (9) sont d'une seule pièce.
